# FASCICULE DE BREVET EUROPEEN

(11) **EP 2 852 843 B1**
(45) Date de publication et mention de la délivrance du brevet: **08.05.2019**
(21) Numéro de dépôt: 13728981.5
(22) Date de dépôt: 17.05.2013
(51) Int. Cl.: G01N 35/08, G01N 35/10, B01L 3/00, G01N 35/00

(54) **DISPOSITIF DE CONNEXION FLUIDIQUE POUR APPAREILS D'ANALYSE BIOLOGIQUE**
FLUIDVERBINDUNGSVORRICHTUNG FÜR BIOLOGISCHE ANALYSEVORRICHTUNGEN
FLUID CONNECTION DEVICE FOR BIOLOGICAL ANALYSIS APPARATUSES

(30) Priorité: 22.05.2012 FR 1254633
(43) Date de publication de la demande: 01.04.2015
(73) Titulaire: BIT Group France, 34099 Montpellier (FR)
(72) Inventeur: CHAMPSEIX, Henri, F-34980 Montferrier sur Lez (FR)
(74) Mandataire: IPAZ
(86) Numéro de dépôt international: PCT/EP2013/060298
(87) Numéro de publication internationale: WO 2013/174762

(56) Documents cités:
- WO-A1-2011/120024
- US-A- 5 062 310
- US-A- 5 279 797
- US-A- 5 609 195
- US-A- 5 788 927
- US-A1- 2003 010 098
- US-A1- 2009 142 846
- US-A1- 2011 247 405
- US-B1- 6 395 235
- US-B1- 7 311 882

## Description

### Domaine technique

La présente invention concerne un dispositif de connexion fluidique destiné à être utilisé dans des appareils d'analyse biologique.

Le domaine de l'invention est plus particulièrement mais de manière non limitative celui des systèmes d'analyse de fluides biologiques.

### Etat de la technique antérieure

Les appareils d'analyse de fluides biologiques tels que l'urine, le sang, le plasma, qui permettent d'effectuer des analyses de manière automatisée, sont couramment utilisés dans les laboratoires et les cabinets médicaux.

On connaît en particulier les analyseurs d'échantillons sanguins, ou analyseurs d'hématologie, qui permettent d'effectuer des opérations de comptage d'éléments cellulaires du sang tels que les globules rouges, les globules blancs et les plaquettes.

On connaît par exemple le dispositif d'analyse sanguine décrit dans le document WO 2006/103335, qui permet de déterminer dans un échantillon de sang, notamment, le nombre total de globules blancs, le nombre de globules blancs par sous population, le nombre de globules rouges et de plaquettes, et le taux d'hémoglobine.

Un tel dispositif nécessite la mise en oeuvre d'un ensemble de techniques de mesure, telles que des mesures d'absorbance, des mesures de résistivité et des mesures optiques de cytométrie en flux, sur des échantillons préparés au préalable lors d'opérations de dilution, de lyse, .... L'ensemble des opérations devant être effectuées de manière automatisée, il s'ensuit que le circuit fluidique d'un tel dispositif est très complexe.

En outre, comme il s'agit d'analyses à finalité médicale, la sécurité de fonctionnement du dispositif doit être optimale pour limiter les risques de mesures erronées et de contamination, ce qui entraîne des obligations de maintenances lourdes et coûteuses.

Il est donc important d'optimiser la maintenabilité du système de gestion des fluides (échantillons, diluants, réactifs, ...). De manière classique, les composants du circuit fluidique (vannes, manifolds, cuves, ...) sont reliés par des tubes ou tuyaux souples, montés sur des raccords. L'inconvénient de ce type d'assemblage est que pour retirer un composant du circuit, il est nécessaire de désaccoupler tous les tuyaux, ce qui est fastidieux et qui peut entraîner des dégradations. Un autre inconvénient est la présence des tuyaux du même coté que les composants fluidiques avec le risque de déconnexion durant les maintenances des composants fluidiques.

On connaît le document FR 2 891 911 qui décrit un dispositif modulaire destiné à l'analyse des fluides biologiques, dans lequel les composants fluidiques sont regroupés en modules fonctionnels, avec un support dans lequel sont réalisées des canalisations. Cette technique permet d'éliminer les liaisons par tuyaux. Elle présente par contre l'inconvénient que l'ensemble des canalisations sont regroupées dans un même module, ce qui impose des contraintes fortes sur la conception et la disposition des éléments. En outre, cette conception pose des difficultés pour le nettoyage et la décontamination des canaux, et il est nécessaire de remplacer l'ensemble du support en cas de problème. D'autres documents de l'état de la technique sont US2009/142846, US2011/247405, WO2011/120024, US6395235, US5788927 et US7311882.

Un objet de la présente invention est de proposer un dispositif de connexion fluidique pour appareils d'analyse biologique, qui permette de relier des composants fluidiques à des conduites de fluide de manière à ce qu'ils puissent aisément être découplés de ces conduites.

Un autre objet de la présente invention est de proposer un dispositif de connexion fluidique pour appareils d'analyse biologique, qui permette de relier des composants fluidiques à des conduites de fluide distinctes les unes des autres, afin de faciliter l'inspection de ces conduites et de permettre leur remplacement individuel.

Un autre objet de la présente invention est de proposer un dispositif de connexion fluidique pour appareils d'analyse biologique, qui permette de disposer les composants fluidiques dans un appareil de manière à ce qu'ils soient aisément accessibles par un opérateur de maintenance, sans être gêné par les conduites et sans risquer d'endommager ces conduites.

Un autre objet de la présente invention est de proposer un dispositif de connexion fluidique qui permette la mise en oeuvre de composants fluidiques normalisés, et utilisables dans tous systèmes qui mettent en oeuvre ledit dispositif de connexion fluidique.

### Exposé de l'invention

Cet objectif est atteint avec un dispositif de connexion fluidique pour appareils d'analyse biologique, tel que défini dans la revendication 1.

Suivant des modes de réalisation, le dispositif de connexion fluidique selon l'invention peut comprendre :
- des raccords aptes à être fixés à l'extrémité de tuyaux ;
- des raccords pourvus d'une ou plusieurs cannelures ;
- des raccords pourvus de moyens d'étanchéité comprenant un joint torique ;
- des raccords pourvus de moyens d'étanchéité comprenant une surface conique ;
- des raccords en matériau polymère ;
- une platine de maintien de forme sensiblement plane.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre un mode de réalisation d'un dispositif de connexion fluidique selon l'invention,
- la figure 2 illustre un détail du mode de réalisation de la figure 1.

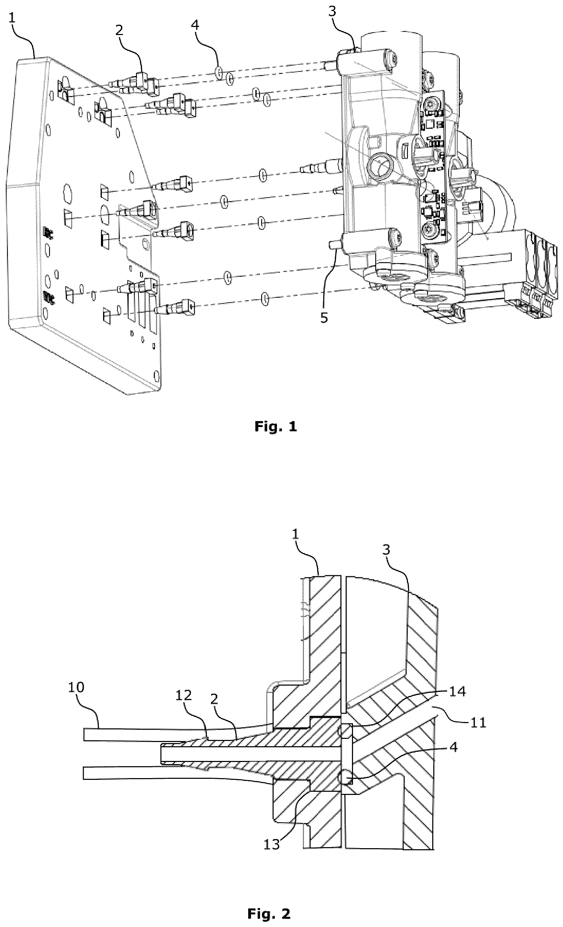

En référence aux figures 1 et 2, le dispositif de connexion fluidique selon l'invention permet de relier un composant fluidique 3 à des conduites de fluide 10.

Dans le mode de réalisation présenté, le composant fluidique 3 est conçu de telle sorte que ses accès fluidiques 11 sont regroupés au niveau d'une surface de liaison.

Les accès fluidiques 11 sont les canaux ou les conduites par lesquelles des fluides d'intérêt (fluides biologiques à analyser, diluants, réactifs) entrent et sortent du composant fluidique 3.

Le dispositif de connexion comprend en outre une platine de maintien 1 contre laquelle le composant fluidique 3 peut être plaqué, sur sa surface de liaison, au moyen de moyens de fixation amovibles 5.

Ces moyens de fixation 5 peuvent être, de manière non limitative, des vis ou des clips serrant le composant fluidique 3 sur la platine de maintien 1.

La platine de maintien 1 comprend des ouvertures traversantes dans lesquelles sont insérés des raccords 2. Ces ouvertures traversantes sont positionnées de telle sorte à être en regard des accès fluidiques 11 du composant fluidique 3 lorsque ce dernier est fixé sur la platine de maintien 1.

Les raccords 2 permettent de relier de manière étanche des conduites de fluide 10 aux accès fluidiques 11 du composant fluidique 3. Ces conduites étanches sont, dans le mode de réalisation présenté, des tuyaux souples en PVC ou toute autre matière adaptée.

Suivant une extrémité, les raccords 2 sont conçus pour être insérés dans les tuyaux souples 10 de manière à y être fermement maintenus. Pour cela ils sont pourvus de cannelures 12 qui retiennent les tuyaux 10 et les empêchent de se dégager.

Suivant leur autre extrémité, les raccords 2 sont pourvus d'un épaulement 13 et de moyens d'étanchéité qui comprennent un joint torique 4.

Ainsi, lorsque la platine de maintien 1 est plaquée contre le composant fluidique 3, elle maintient également les raccords 2 plaqués fermement contre la surface de liaison de ce composant fluidique 3 de telle sorte à établir une liaison étanche avec les accès fluidiques 11 correspondants.

Les joints toriques sont maintenus par un épaulement 14 pratiqué dans le composant fluidique 3, permettant ainsi le démontage ou le remplacement du composant fluidique 3 sans perte des joints.

Les moyens d'étanchéité 4 peuvent également comprendre, à la place ou en complément d'un joint, une surface conique qui est insérée et pressée dans l'accès fluidique.

Les raccords 2 peuvent être réalisés par moulage ou usinage, par exemple en matériau polymère ou en métal.

La platine de maintien peut également être réalisée dans tout matériau adapté, par exemple en matériau polymère ou en métal.

Avantageusement, les raccords 2 peuvent être normalisés et donc réalisés en grande série à faible coût. Dans la mesure où ils sont conçus pour être difficiles à retirer des tuyaux 10, ils peuvent être jetables lorsque l'on change les tuyaux 10.

Les accès fluidiques 11 peuvent être positionnés à priori n'importe où sur la surface de liaison en fonction des contraintes de conception du composant fluidique 3.

La platine de montage 1 étant de forme simple, elle peut être aisément réalisée avec des ouvertures positionnées de manière à correspondre à la position des accès fluidiques 11, avec des opérations d'usinage simple et/ou par injection de matériau polymère (plastique).

Il est important de noter que le fait que les raccords 2 soit distincts de la platine de montage 1 simplifie considérablement, voire supprime totalement, l'usinage de ces composants. En effet, la réalisation en une seule pièce de la platine de montage 1 et des raccords 2 serait beaucoup plus difficile et onéreuse. Elle serait en particulier impossible par moulage à cause des cannelures 12 si les accès fluidiques 11 ne sont pas disposés en ligne.

Comme expliqué précédemment, le dispositif de connexion fluidique selon l'invention simplifie considérablement les manipulations :
- Pour retirer un composant fluidique 3, il suffit de le désaccoupler de la platine de maintien 1, sans toucher aux conduites de fluide ou aux tuyaux 10 qui restent maintenus en position par la platine de maintien 1 ;
- Lorsqu'on remonte un composant fluidique 3, dès qu'il est serré contre la platine de maintien 1, les liaisons fluidiques entre les tuyaux 11 et les accès fluidiques 11 sont automatiquement rétablies ;
- Il est également possible d'intervenir très facilement sur les conduites de fluide 10. En effet, lorsque le composant fluidique 3 est retiré, un tuyau 10 avec éventuellement un raccord 2 monté en bout peut aisément être retiré ou remplacé en le faisant passer au travers de l'ouverture de la platine de maintien 1.

Le dispositif de connexion fluidique selon l'invention permet ainsi de conserver les avantages d'une conception de système fluidique dans laquelle les composants fluidiques 3 sont reliés par des tuyaux souples 10 (tels que par exemple la facilité d'intégration et la modularité), tout en évitant les problèmes de découpage des tuyaux 10 lors de la maintenance.

Il est possible de concevoir un appareil en disposant les composants fluidiques 3 essentiels de manière à ce qu'ils soient facilement accessibles à un opérateur pour un échange ou une maintenance sans que ce dernier soit gêné par les conduites de fluide 10. Les composants fluidiques 3 peuvent par exemple être placés sur une face d'une platine de maintien 1 directement accessible lorsqu'on ouvre l'appareil, avec toutes les conduites 10 disposées de l'autre côté de cette platine de maintien 1.

Le dispositif de connexion fluidique selon l'invention peut bien entendu être utilisé dans tout système d'analyse mettant en oeuvre des composantes fluidiques 3.

A titre d'exemple non limitatif, il peut être en particulier mis en oeuvre pour réaliser un dispositif d'analyse sanguine tel que décrit dans le document WO 2006/103335, qui permet de déterminer dans un échantillon de sang un nombre total de globules blancs, une répartition de ces globules blancs en sous populations, un nombre de globules rouges et de plaquettes, et un taux d'hémoglobine.

Dans ce cas, les composants fluidiques 3 peuvent comprendre notamment :
- des réservoirs destinés à recevoir l'échantillon de sang, et/ou à effectuer des opérations de dilution et de lyse,
- un ensemble de cuves de mesure pour effectuer des opérations de mesures d'impédance électrique, et/ou de cytométrie en flux optique pour compter des cellules,
- des seringues pour déplacer les fluides,
- des valves et des manifolds pour configurer le circuit hydraulique en fonction des opérations.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif de connexion fluidique pour appareils d'analyse biologique, destiné à relier simultanément une pluralité de conduites de fluide (10) et au moins un composant fluidique (3) comprenant une surface de liaison avec une pluralité d'accès fluidiques (11), ledit dispositif comprenant :
- une platine de maintien (1) ayant une surface externe,
- des moyens de fixation amovibles (5) aptes à presser ladite platine de maintien (1) contre ladite surface de liaison,
- des raccords (2) ayant une extrémité conçue pour être insérée à l'extrémité des conduites de fluide (10) de manière à y être fermement maintenus, et
- des moyens d'étanchéité (4) aptes à permettre l'établissement d'une liaison étanche entre lesdits raccords (2) et lesdits accès fluidiques (11),
- ladite platine de maintien (1) comprenant des ouvertures traversantes en regard des accès fluidiques (11) et étant conformée de telle sorte à recevoir lesdits raccords (2) dans lesdites ouvertures traversantes et à les maintenir pressés contre la surface de liaison.

2. Le dispositif de connexion fluidique de la revendication 1, qui comprend des raccords (2) pourvus d'une ou plusieurs cannelures.

3. Le dispositif de connexion fluidique de l'une des revendications précédentes, qui comprend des raccords (2) pourvus de moyens d'étanchéité (4) comprenant un joint torique.

4. Le dispositif de connexion fluidique de l'une des revendications précédentes, qui comprend des raccords (2) pourvus de moyens d'étanchéité comprenant une surface conique.

5. Le dispositif de connexion fluidique de l'une des revendications précédentes, qui comprend des raccords (2) en matériau polymère.

6. Le dispositif de connexion fluidique de l'une des revendications précédentes, qui comprend une platine de maintien (1) de forme sensiblement plane.

## Patentansprüche

1. Strömungsverbindungsvorrichtung für Geräte zur biologischen Analyse, die dazu bestimmt ist, gleichzeitig eine Mehrzahl von Fluidleitungen (10) und zumindest ein strömungstechnisches Bauteil (3) zu verbinden, das eine Verbindungsfläche mit einer Mehrzahl von Strömungszugängen (11) aufweist, wobei die Vorrichtung enthält:
- eine Halteplatte (1) mit einer Außenfläche,
- abnehmbare Befestigungseinrichtungen (5), die dazu geeignet sind, die Halteplatte (1) an die Verbindungsfläche zu drücken,
- Anschlüsse (2) mit einem Ende, das dazu ausgelegt ist, in das Ende der Fluidleitungen (10) so eingesetzt zu werden, dass sie fest daran befestigt werden, und
- Dichtungseinrichtungen (4), die dazu ausgelegt sind, das Herstellen einer dichten Verbindung zwischen den Anschlüssen (2) und den Strömungszugängen (11) zu gestatten,
- wobei die Halteplatte (1) durchgehende Öffnungen gegenüber den Strömungszugängen (11) aufweist und so ausgebildet ist, dass sie die Anschlüsse (2) in den durchgehenden Öffnungen aufnimmt und sie an die Verbindungsfläche gedrückt hält.

2. Strömungsverbindungsvorrichtung nach Anspruch 1, wobei sie Anschlüsse (2) enthält, die mit einer oder mehreren Rillen versehen sind.

3. Strömungsverbindungsvorrichtung nach einem der vorangehenden Ansprüche, wobei sie Anschlüsse (2) enthält, die mit Dichtungseinrichtungen (4) versehen sind, die einen O-Ring enthalten.

4. Strömungsverbindungsvorrichtung nach einem der vorangehenden Ansprüche, die Anschlüsse (2) enthält, die mit Dichtungseinrichtungen versehen sind, die eine konische Fläche haben.

5. Strömungsverbindungsvorrichtung nach einem der vorangehenden Ansprüche, die Anschlüsse (2) aus Polymermaterial enthält.

6. Strömungsverbindungsvorrichtung nach einem der vorangehenden Ansprüche, die eine Halteplatte (1) mit im Wesentlichen flacher Form enthält.

## Claims

1. Fluid connection device for biological analysis apparatuses, intended for simultaneously connecting a plurality of fluid conduits (10) and at least one fluid component (3) comprising a connecting surface with a plurality of fluid ports (11), said device comprising:
- a holding plate (1) having an external surface,
- removable fastening means (5) suitable for pressing said holding plate (1) against said connecting surface,
- connectors (2) having an end designed to be inserted into the end of the fluid conduits (10) so as to be held firmly in place therein, and
- sealing means (4) suitable for establishing a sealed connection between said connectors (2) and said fluid ports (11),
- said holding plate (1) comprising through-openings facing the fluid ports (11) and being shaped in such a way to receive said connectors (2) in said through-openings and to hold them pressed against the connecting surface.

2. The fluid connection device of claim 1, which comprises connectors (2) provided with one or more grooves.

3. The fluid connection device of one of the preceding claims, which comprises connectors (2) provided with sealing means comprising an O-ring.

4. The fluid connection device of one of the preceding claims, which comprises connectors (2) provided with sealing means (4) comprising a conical surface.

5. The fluid connection device of one of the preceding claims, which comprises connectors (2) made from polymer material.

6. The fluid connection device of one of the preceding claims, which comprises a holding plate (1) with a substantially flat shape.
